# EUROPEAN PATENT SPECIFICATION

(11) **EP 2 459 869 B1**
(45) Date of publication and mention of the grant of the patent: **29.04.2015**
(21) Application number: 10804767.1
(22) Date of filing: 19.07.2010
(51) Int. Cl.: F03B 13/26, F03B 17/06

(54) **WAVE CURRENT PLANT AND METHOD THEREOF**
WELLENSTROMANLAGE UND VERFAHREN DAFÜR
CENTRALE UTILISANT LES COURANTS DES MARÉES ET PROCÉDÉ ASSOCIÉ

(30) Priority: 31.07.2009 NO 20092798
(43) Date of publication of application: 06.06.2012
(73) Proprietor: Aqua Energy Solutions AS, 5508 Karmsund (NO)
(72) Inventor: TORVESTAD, Jan, Christian, N-5528 Haugesund (NO)
(74) Representative: Acapo AS
(86) International application number: PCT/NO2010/000285
(87) International publication number: WO 2011/014072

(56) References cited:
- DE-A1- 2 152 637
- DE-A1- 2 152 637
- US-A- 4 303 834
- US-A- 4 303 834
- US-A1- 2004 174 019
- US-A1- 2004 174 019

## Description

The present invention relates to a water current power plant to be placed under water, comprising several sails or wings that are fastened to a rotary endless chain running between opposite facing, respective turning discs, with the endless chain being forced round, driven by the wings under the influence of the surrounding water, and at least one generator to generate electric energy that is connected with the endless chain. The invention also relates to a method for operation of a water current power plant.

There is an ever increasing need for "green renewable energy". Large ocean currents and tidal waters are considered to be one of the largest renewable energy sources that exist. There are many proposals as to how one shall utilise these resources. Most of these are related to using water turbines in different configurations.

There are also concepts for use of underwater sails for the utilisation of water as an energy source, described in NO 20035448 and DE2152637, among others.

JP 410061598 shows an endless system of sails or wings that are driven round two turning discs, where the performance is regulated by the ascent angle of the wings, the number of rotations, area of the wings, etc. US 6,081,043 also relates to an endless system of sails or wings, though to be used in a wind power plant, and where the orientation of the wings in relation to the drive cables can be regulated.

Reference is also made to US 1,847,855 A1 and US 4,350,474 A, both of these relate to tidal power plants for the generation of electricity.

The object of the present invention is to provide a water power plant that can be lowered into the water to a desired depth, and which can both take up and receive strains from the flowing water to produce electricity continuously.

The above mentioned object with a water power plant as defined in the independent claim 1 is achieved in that the turning discs are mounted in respective frames that can be anchored, and that the endless chain runs freely between the frames and around the turning discs and that a drive gear is connected to, at least, one of the turning discs and is connected with an universal coupling, with said generator being connected to the universal coupling.

Alternative embodiments of the water current power plant are characterised by the dependent claims 2-14.

The endless chain can comprise two endless cables, in which said sails or wings are arranged between the cables, and each cable can run over and around a respective turning disc so that the sails or the wings are rotated between respective pairs of turning discs.

The universal coupling can adjust the speed of the cables with respect to each other, whereby the angle of the sails or wings in relation to the water current is regulated. The universal coupling can also be connected to a drive gear connected to each turning disc in a respective frame.

Furthermore, said frames are preferably anchored so that they can rotate to adjust to the angle of the cables such that the tension in the cables is perpendicular to the rotational axis of the turning discs.

The drive gear can comprise a first pulley fastened to a common rotational axis with a turning disc, which, via a belt or a chain, is connected to a second pulley fastened to a shaft for the universal coupling. Alternatively, the drive gear can be made for shaft operation.

The pairs of turning discs can be arranged to rotate independently of each other and to be controlled by the universal coupling.

In one embodiment the universal coupling can constitute a gear box comprising at least two planetary gears, with the respective shafts of the universal coupling being connected to shafts of the planetary wheels of the planetary gears, and between the ring wheel of the planetary gears, a first conical cogged wheel is placed which, via a shaft, is connected to the generator and a second conical cogged wheel, which, via a shaft is connected to a servomotor. The shaft connected to the generator is preferably arranged to control the common movement of the cables when the generator is running and the shaft connected to the servomotor is preferably arranged to control the differential movement of the cables, independently of said common movement, thus to regulate the angle of the wings between the cables.

The universal coupling and the generator can be kept in a watertight housing.

Furthermore the turning discs can be arranged for mutual displacement along said rotational axis, whereby the distance between pairs of turning discs is altered, dependent on the angle of the wings.

In a preferred embodiment the wings can be formed with, at least, a partially arched aeroplane wing shape, where the arched shape is arranged to give the wings equilibrium in the water and any deviations from the equilibrium position are counteracted by the forces that act on the wing.

Said sails or wings can be fastened to a respective cable with the help of clamp couplings, where said clamp coupling comprises a locking mechanism and which is arranged to give the wings a limited movement when they run over the turning discs and otherwise to maintain the wings in a desired position. Furthermore, the clamp coupling can be arranged to adjust the angle of the wings in the water.

The turning discs can be axially displaceable in the respective frames.

Said objects are also achieved with a method as defined in the independent claim 18, by fastening the turning discs in respective frames that can be anchored and to let the endless chain run freely between the frames and round the turning discs, and by connecting a universal coupling between a drive gear and at least one of the turning discs, where the universal coupling controls the common movement of cables of the endless chain, when the generator is running, and controls the differential movements of the cables, independently of said common movement, for the regulation of the angle of the wings between the cables by adjusting the speed of the cables in relation to each other.

According to alternative embodiments of the method, a drive gear can be connected between the universal coupling and the turning discs, and can drive the endless chains around by generation of a pushing force and a lifting force that are transferred to the cables, the wings can be tilted in relation to the water current.

The wings can be fitted on cables, such as wire, rope, steel cable, etc., and adjusted with an pitch angle against the water stream so that they exert a force on the cables that run in a path across the water stream. The force on the wings is generated by drag (pushing force) and lift, which is the principle for an aeroplane wing. One can convert some of the kinetic energy in the water to electrical energy. The sum of all the wings gives a relatively large area against which the water current acts. The appliance is especially adapted to straits and fjords, possibly where one has a natural constriction in the terrain that gives a higher tidal flow velocity. The system can also be used in rivers.

The system can be placed at a depth that prevents it interfering with ships and people, for example, at a depth of 20 metres. The system is easy to scale up, and can be adapted to the individual location by varying:
- The size of the wings
- The number of wings/length on the stretch
- Pitch/angle of attack (can be performed during operation)

The wings are initially fastened permanently to cables with two flexible segments and follow the cables around the turning discs.

Relative displacement of the fastening points for the wings on the cables defines the pitch on the wings in relation to the direction of the current.

By altering the distance between the turning discs combined with longitudinal displacement between the cables, the angle of the wings can be altered relative to the direction of the current. The wings have also a limited possibility to rotate vertically. The water current will, to a large extent, affect the vertical angle of the wings.

Because of the shape of the wings, there is one angle that provides an equilibrium position. The wing is preferably self-stabilising. Any deviation from this angle will be counteracted by the forces that act on the wing. When the pushing force from the wings works along the cables (which gives power to the generator) and across the cables, the profile of the endless chain will be in the shape of an arch.

So that the cables will not be pulled out of the grooves in the turning discs, the discs are fastened in a horizontally rotary frame that adapts to the angle of the cables. This means that the tension in the cable is always perpendicular to the shaft.

The cables drive the turning discs, which in turn drive a generator via a drive gear. The drive gear is adapted so that it provides optimal revolutions to the generator in relation to the speed of the cables.

The invention shall now be explained in more detail with the help of an embodiment example shown in the figures, in which:

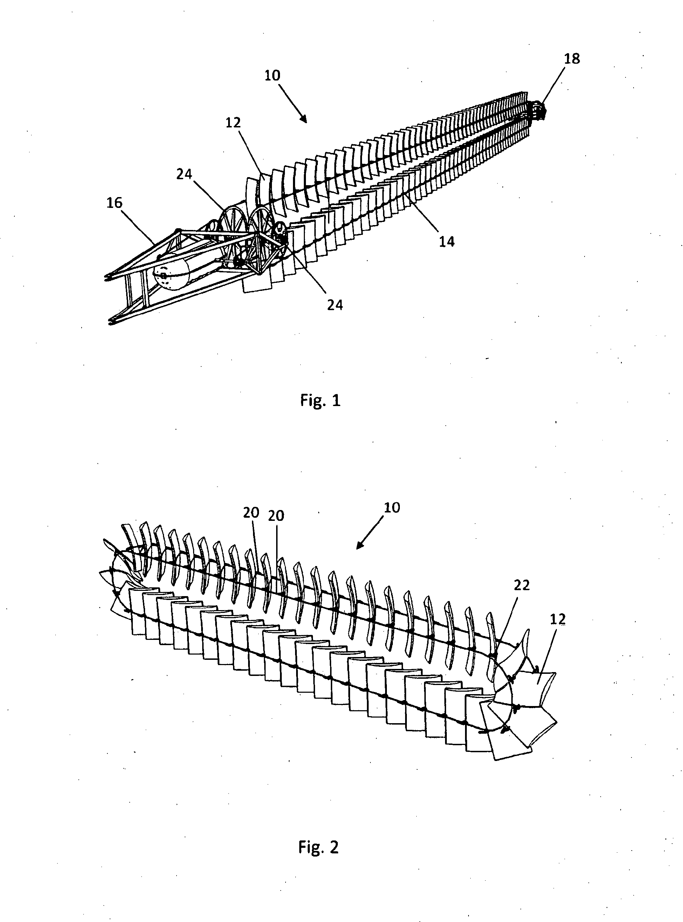

Figure 1 shows in perspective an embodiment of a water current power plant according to the invention.
Figure 2 shows in perspective an endless chain that is part of the invention.
Figure 3 shows in perspective the water current power plant under the influence of a stream of water.
Figure 4 shows figure 3, but seen more from above.
Figure 5 shows one end of the water current power plant shown in figure 1.
Figure 6 shows figure 5, but without the frame and a watertight housing.

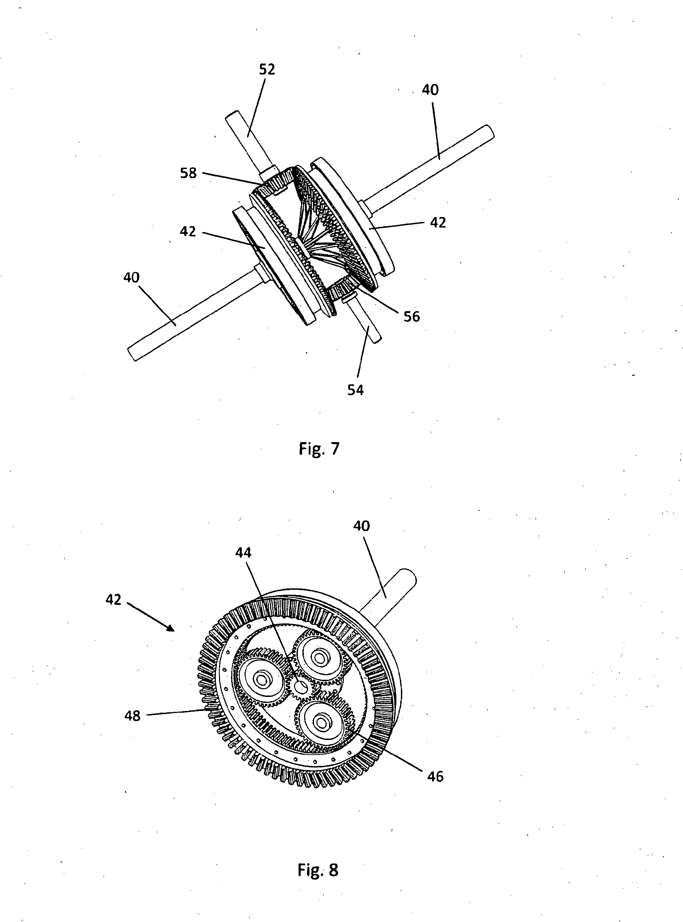

Figure 7 shows an outline of a universal coupling for use in the water current power plant according to the invention.
Figure 8 shows a planetary gear that is part of the universal coupling in figure 7.
Figure 9 shows a wing lock according to the present invention.
Figure 10 shows the exploded wing lock shown in figure 9.

As the figures show, an embodiment of the present water current power plant 10 comprises an endless chain 14 which comprises at least two cables 20. Between these cables 20 several sails or wings 12 are arranged with the help of clamp couplings 22, preferably so that the sails or the wings are fastened in the middle and are in equilibrium, but pending on the circumstances they can also be fastened, displaced from their equilibrium position. The cables 20 run over respective turning discs 24 that preferably are placed in pairs in opposite facing frames 16, 18, so that a space is created between the turning discs 24 that the sails or the wings 12 can run between when they go round at the turning discs 24.

The sails or the wings 12 are formed so that the water current pushes the wing (drag) at the same time as the water current flows faster behind the surface behind the wing (lift). This gives a resultant power contribution that gives an additional effect on the cables and thus increased power output. The shape of the sails or the wings 12 can therefore be chosen with an arched aeroplane wing form. Alternatively, the wings 12 can be flat on both sides and/or not arched, but this will then lead to a poorer effect.

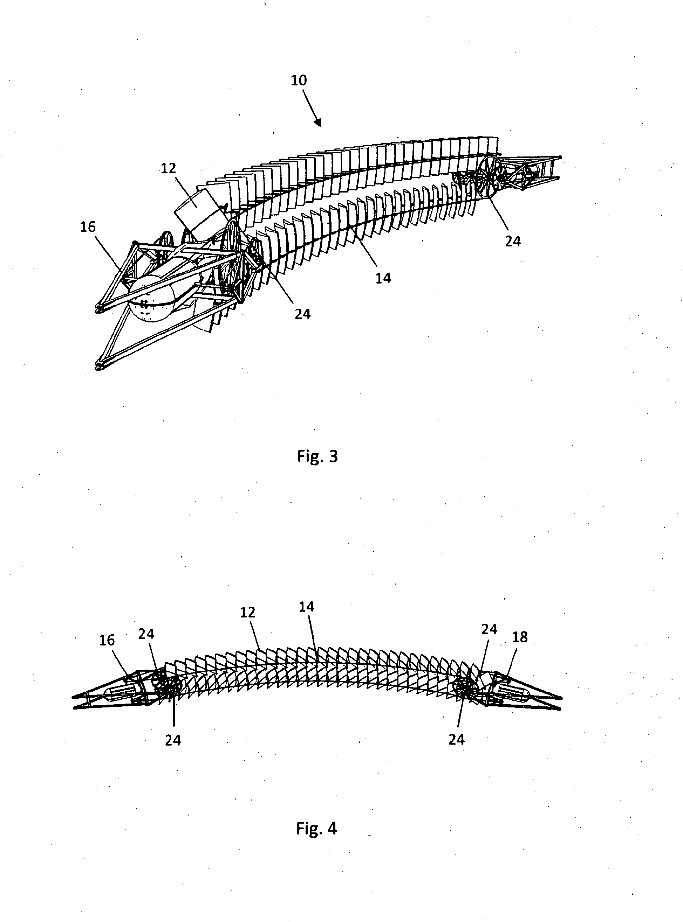

Said frames 16, 18 can be anchored to the bottom, the banks of a river, possibly to other equipment in the water or the sea, and in such a way that they do not disturb shipping or people. The frames 16, 18 are preferably horizontally rotary and function as mounting for the endless chains 14, drive gear 28 and other equipment for the water current power plant 10. As the figures 3 and 4 show, the endless chain 14 will normally be influenced by the force from the water current and form an arched shape during operation, which means that it is essential that the frames can rotate so that the cables are not pulled out of the grooves in the turning discs 24.

The turning discs 24 are, as mentioned, arranged in pairs in each frame 16, 18, and rotate preferably on the same rotational axis. Pairs of turning discs 24 are arranged to rotate independently of each other and to be controlled by a universal coupling 50. The drive gear 28 is connected to the same rotational axis in the form of a first pulley 32 which is connected to a second pulley on a shaft 40 of the universal coupling 50. The first and the second pulley are connected via a belt or a chain 34 in a generally known way so that the rotation of the turning disc 24, and thus the first pulley 32, drives the second pulley 36 which in turn rotates the shaft 40 of the universal coupling 50. One or two such drive units 28 can be placed in every frame, but it is preferred that there are two drive units 28 arranged to the outer side of respective turning discs 24, so that they do not disturb the passing of the wings at the turning discs 24. The first pulley 32 can be arranged to the same rotational axis as the turning discs 24 and have the same direction of rotation. The drive gear 28 can alternatively be made with a shaft operation instead of a belt or a chain operation as described above.

Furthermore, the turning discs 24 are arranged so that they can be displaced axially along the axis of rotation so that the distance between them can vary with the variation of the pitch of the wings 12.

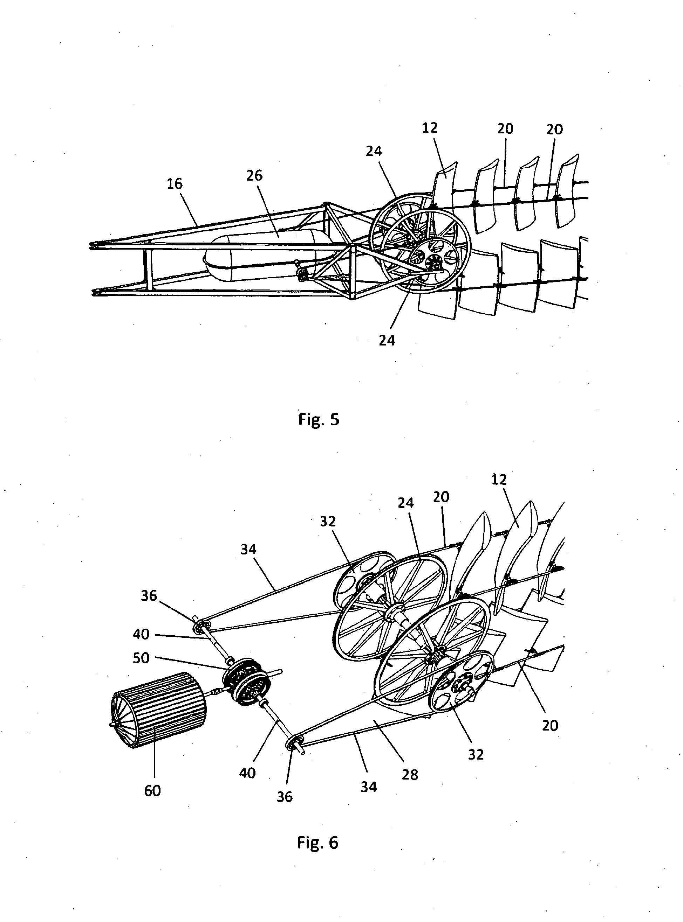

Said universal coupling 50 is arranged in one or both frames 16, 18, where the universal coupling is connected to a generator 60 to generate electrical energy. The universal coupling 50 and the generator 60 can be held in a watertight housing 26. Figures 5 and 6 show one end of the water current power plant 10, with and without the frame 16 and housing 26, respectively. As it can be seen, a drive gear 28 is connected to a respective shaft 40 of the universal coupling 50 for the operation of the generator 60.

In an alternative embodiment (not shown) the generator 60 can be placed out of the water. The generator 60 can in such case be connected in a corresponding way to the universal coupling 50 and be connected with a rigid or non-rigid connection. One advantage with such a solution is that it will ease the maintenance of the generator for one thing.

In addition to the operation of the generator, the universal coupling 50 is arranged to individually adjust the speed of each cable 20 in the endless chain 14 for the adjustment of the angle of the wings 12 in the water. This can be carried out during operation of the water current power plant 10, in that said universal coupling 50 can, for example, be made up of a gear box with two planetary gears 42. The construction of a planetary gear is considered to be known to a person skilled in the arts and will therefore not be explained in more detail. A planetary gear is a variant of the cogged wheel gear. It is composed of a set of cogged wheels: The sun wheel innermost, then the planetary wheels and the ring wheel outermost with cogging. The good quality gives the planetary gear a long lifetime and it can transfer a high torque in addition.

The torque that is applied to the shafts 40 of the universal coupling from the drive units 28, is transferred to the planetary wheels 46 which in turn is distributed to the sun wheel 44 and the ring wheel 48. If the ring wheel 48 stands still all movement is transferred to the sun wheel 44. The two planetary gears 42 are arranged facing each other so that common movements of the cables 20 in the endless chain 14 lead to a common angle movement of the planetary gears. The ring wheels 48 are fitted with tilted teeth that face each other and placed in between them is a first conical cogged wheel 56 which, via a shaft 54, is connected to the generator 60 and a second conical cogged wheel 58 which, via a shaft 52 is connected to a servomotor (not shown). The shaft 54 connected to the generator 60 controls the common movement of the cables 20 when the generator is operating and the shaft 52 connected to the servomotor controls the differential movement of the cables 20, independently of said common movement, to regulate the angle of the wings 12 between the cables 20.

Therefore, it is possible in this system to mechanically isolate common and differential moments to different shafts. A differential moment which changes the angle of the wings 12 is distributed to the servomotor and common movements that represent energy in the system are distributed to the generator 60.

The moment which is applied to the shafts 40 of the universal coupling from the drive units 28 could alternatively be transferred to the sun wheel 44, but this would then lead to a different gear transmission.

When the wings 12 with pitch shall pass the turning discs 24, the wings can be bent in relation to the clamp coupling 22. The clamp coupling should therefore be flexible. However, a flexible lock can possibly not provide sufficient rigidity on the long stretches (where one can expect local turbulence) to guarantee that the wings do not twist round and get stuck.

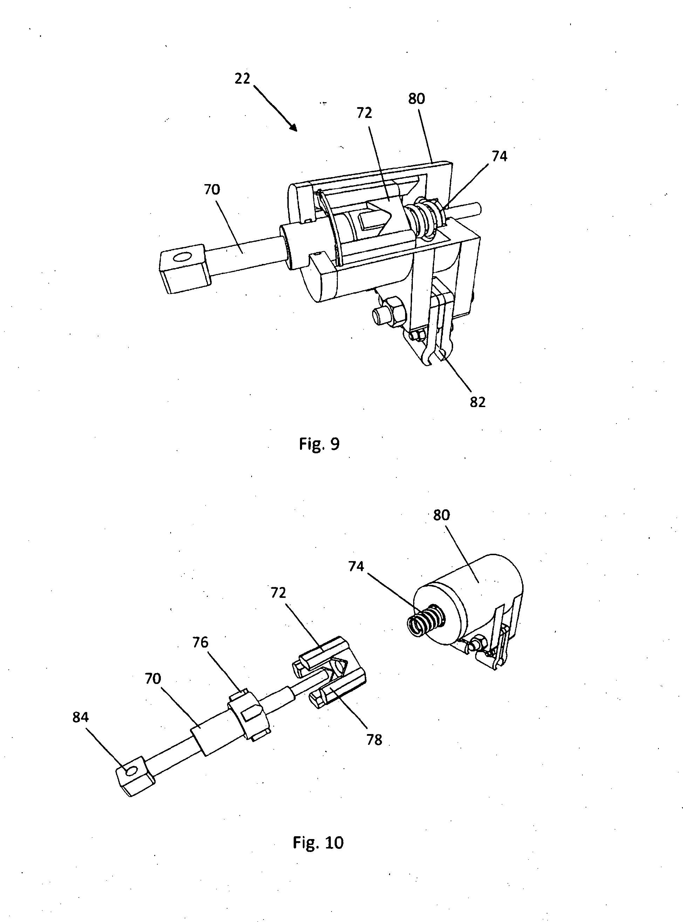

This problem can be solved as shown in figures 9 and 10 by having a clamp coupling which allows limited movement. The clamp coupling must then ensure that there is sufficient flexibility around the turning discs, but at the same time, is small enough to hold the wings within acceptable angles. Furthermore the clamp couplings 22 can have a spring mechanism (i.e. be "self adjusting"). Examples of satisfactory locking characteristics in such a clamp coupling will be: Give enough support to the wings when they are in the long stretches; be flexible enough to go around the wheels, allow altering of the pitch of the wings, not corrode/be destroyed in seawater; and to permit some shortening of the coupling around the wheels.

An important function for the locking function of the clamp coupling is to let the wings go round the turning discs. As the two couplings are not placed directly opposite each other on the cables, the one lock can begin to travel round the turning disc before the other. This can lead to the wing being twisted a little and the coupling ought to be flexible enough for this movement not to cause much tension. Another reason for it being practical.to permit a certain degree of rotation is that there may be uneven water currents so that the force on the top or bottom side of the wing becomes larger for a short while. The wing can then rotate somewhat, but because of the shape of the wings a force balance will come into being so that the wing goes back to its neutral position. Even with a steady water current the force on the upper part of the wing becomes greater than the force on the lower part when the wing is twisted so that the upper part is more perpendicular. This ensures that the wing can rotate about its centre axis, and if it rotates too far a corresponding situation will arise for the lower part of the wing.

The principle of this design is that when the cylinder 70 is rotated, the inclined surfaces of the wing 76 will glide against the inclined surfaces 78 in the crown 72, and the crown will be forced downwards in a groove in the housing 80. Here is a spring 74 which is compressed against the rear wall of the housing. When the cylinder is rotated a certain angle, for example 15°, in one direction, the wings 76 hit the walls of the crown 72 and can then not rotate any further. If one continues and tries to rotate the cylinder 70 the force between the wings and the walls of the crown will counteract this movement. The crown 72 can not rotate as it lies in a groove in the housing 80. When the force moment ceases, the spring 74, which was compressed, will return to its neutral position and then push the crown 72 upwards again. This will lead to the inclined surfaces 78 in the crown 72 pushing the inclined surfaces of the wings 76 to the side and the cylinder 70 being rotated back to its initial position.

The housing 80 has couplings 82 at the bottom for fastening of the cables 20 while the cylinder 70 comprises a fastening point 84 for fastening to the wing 12.

Compensation for the mounting point is also wanted for the plant. When the plant is operating the cable pair 20 can lie in an arch. This is, to a large extent, compensated for in that the stations, i.e. the frames 16, 18, rotate, but as the outermost cable will have to be slightly longer than the innermost cable, a situation can arise that the cables do not enter the grooves perfectly on the turning discs 24. It is assumed that this problem can be compensated for by moving the mounting point in the respective frame (let it be off-centre). In practice this can be carried out by pushing the discs 24 in parallel along the shaft with the help of hydraulics.

## Claims

1. Water current power plant (10) for placement under water, comprising several sails or wings (12) that are fastened to a rotary endless chain (14) running between opposite facing, respective turning discs (24), with the endless chain (14) being forced round by thrust from the wings (12) under the influence of the surrounding water, and at least one generator (60) for the generation of electric energy that is connected with the endless chain (14), **characterised in**
- **that** the turning discs (24) are mounted in respective frames (16, 18) that are rotary anchored, and that the endless chain (14) comprises several cables (20) that run freely between the frames (16, 18) and round the turning discs (24), and
- a drive gear (28) is connected to each of the turning discs and is connected to a universal coupling (50), with said generator (60) being connected to the universal coupling (50), and
**that** said universal coupling (50) is arranged to adjust the speed of the turning discs (24), and thus the cables (20), independently with respect to each other, whereby the angle of sails or the wings (12) in relation to the water current is regulated.

2. Water current power plant (10) according to claim 1, **characterised i n** that the endless chain (14) comprises two endless cables (20), in which said sails or wings (12) are arranged between the cables (20), and that each cable (20) runs over and round a respective turning disc (24) so that the sails or the wings (12) are rotated between respective pairs of turning discs (24).

3. Water current power plant (10) according to claim 1, **characterised in that** said frames (16, 18) are rotary mounted so that they can adjust to the angle of the cables such that the tension in the cables (20) is perpendicular to the axis of rotation of the turning discs (24).

4. Water current power plant (10) according to claims 1, **characterised in that** said universal coupling (50) is connected to a drive gear (28) connected to each turning disc (24) in a respective frame (16, 18).

5. Water current power plant according to claim 4,
**characterised in that** the drive gear (28) comprises a first pulley (32) fastened to a common axis of rotation with a turning disc (24), which, via a belt or chain (34), is connected to a second pulley (36) fastened to a shaft (40) of the universal coupling (50).

6. Water current power plant according to claim 5,
**characterised in that** pairs of turning discs (24) are arranged to rotate independently of each other, and to be controlled by the universal coupling (50).

7. Water current power plant according to one or more of the preceding claims, **characterised I n** that said universal coupling (50) is made up of a gear box comprising at least two planetary gears (42), with respective shafts (40) of the universal coupling being connected to the shafts of the planetary wheel (46) of the planetary gears, and that between the ring wheel (48) of the planetary gears a first conical cogged wheel (56) is placed which, via a shaft (54) is connected to the generator (60) and a second conical cogged wheel (58), which is connected to a servomotor via a shaft (52).

8. Water current power plant according to claim 7,
**characterised in that** the shaft (54) connected to the generator (60) is arranged to control the common movement of the cables (20) when the generator is running, and that the shaft (52) connected to the servomotor is arranged to control the differential movement of the cables (20) independently of said common movement, thus to regulate the angle of the wings (12) between the cables (20).

9. Water current power plant according to one or more of the preceding claims, **characterised i n** that the universal coupling (50) and the generator (60) are kept in a watertight housing (26).

10. Water current power plant according to claim 4,
**characterised in that** the turning discs (24) are arranged to be mutually displaced along said rotational axis, whereby the distance between pairs of turning discs (24) is altered dependent on the angle of the wings (12).

11. Water current power plant according to claims 1,
**characterised in that** said drive gear (28) is adapted for shaft operation.

12. Water current power plant according to one or more of the preceding claims, **characterised in that** the wings (12) are formed in an at least partial arched aeroplane wing shape.

13. Water current power plant according to claim 12,
**characterised in that** the arched shape is arranged to give the wing (12) equilibrium in the water and that deviations from the equilibrium position are counteracted by the forces that act on the wing.

14. Water current power plant (10) according to claim 2,
**characterised in that** said sails or wings (12) are fastened to respective cables (20) with the help of clamp couplings (22) where said clamp coupling (22) comprises a locking mechanism and is arranged to give the wings limited movement when they run over the turning discs (24) and otherwise to maintain the wings in the wanted position.

15. Water current power plant (10) according to claim 14,
**characterised in that** the clamp coupling (22) is arranged to adjust the angle of the wings in the water.

16. Water current power plant (10) according to claim 1,
**characterised in that** the turning discs (24) can be displaced axially In their respective frames (16, 18).

17. Method for operation of a water current power plant (10) to be placed under water, comprising several sails or wings (12) that are fastened to a rotary endless chain (14) running between opposite facing, respective turning discs (24) with the endless chain (14) being driven round by thrust from the wings (12) under the influence of the surrounding water, and to generate electrical energy with the help of, at least, one generator (60) that is connected to the endless chain (14), **characterised by**
- to fasten the turning discs (24) in pairs in respective frames (16, 18), said frames being rotary anchored, and to let several cables (20) of the endless chain (14) run freely between the frames (16, 18) and round between the turning discs (24), and
- to connect a universal coupling (50) via a drive gear (28 to, at least, one of the pairs of turning discs (24), where the universal coupling controls the common movement of the cables (20) of the endless chain (14) when the generator (60) is running, and controls the differential movement of the cables (20) independently of said common movement, for regulation of the angle of the wings (12) between the cables (20), by adjustment of the speed of the cables (20) In relation to each other.

18. Method according to claim 17, **characterised in that** the drive gear (28) is being connected between the universal coupling (50) and each of the turning discs (24).

19. Method according to claim 17, **characterised i n** that to drive the endless chain (14) round by generation of a pushing force and a lifting force that is transferred to the cables (20), the wings (12) are tilted In relation to the water current.

## Patentansprüche

1. Wasserströmungskraftwerk (10) zur Anordnung unter Wasser, umfassend mehrere Segel oder Flügel (12), die an einer rotierenden Endloskette (14) befestigt sind, welche zwischen zwei einander gegenüberliegenden, jeweiligen Drehscheiben (24) verläuft, wobei die Endloskette (14) sich durch Schub von den Flügeln (12) unter dem Einfluss des umgebenden Wassers rundet, und mindestens einen Generator (60) für die Erzeugung elektrischer Energie, der mit der Endloskette (14) verbunden ist,
**dadurch gekennzeichnet, dass**
- die Drehscheiben (24) in jeweiligen Rahmen (16, 18), die drehverankert sind, angebracht sind, und dass die Endloskette (14) mehrere Kabel (20) aufweist, die frei zwischen den Rahmen (16, 18) und um die Drehscheiben herum (24) verlaufen, und
- ein Antriebsrad (28) mit jeder der Drehscheiben verbunden ist und mit einer Gelenkkupplung (50) verbunden ist, wobei der Generator (60) mit der Gelenkkupplung (50) verbunden ist, und
dass die Gelenkkupplung (50) angeordnet ist, um die Geschwindigkeit der Drehscheiben (24) und damit der Kabel (20) unabhängig voneinander einzustellen, wobei der Winkel der Segel oder der Flügel (12) in Bezug auf die Wasserströmung reguliert wird.

2. Wasserströmungskraftwerk (10) nach Anspruch 1,
**dadurch gekennzeichnet, dass** die Endloskette (14) zwei Endloskabel (20) aufweist, wobei die Segel oder Flügel (12) zwischen den Kabeln (20) angeordnet sind, und dass jedes Kabel (20) über und um eine jeweilige Drehscheibe (24) herum läuft, so dass die Segel oder die Flügel (12) zwischen jeweiligen Paaren von Drehscheiben (24) gedreht werden.

3. Wasserströmungskraftwerk (10) nach Anspruch 1,
**dadurch gekennzeichnet, dass** die Rahmen (16, 18) drehbar gelagert sind, so dass sie sich an den Winkel der Kabel anpassen können, so dass die Spannung in den Kabeln (20) senkrecht zu der Rotationsachse der Drehscheiben (24) verläuft.

4. Wasserströmungskraftwerk (10) nach Anspruch 1,
**dadurch gekennzeichnet, dass** die Gelenkkupplung (50) mit einem Antriebsrad (28), das mit jeder Drehscheibe (24) in einem jeweiligen Rahmen (16, 18) verbunden ist, verbunden ist.

5. Wasserströmungskraftwerk nach Anspruch 4,
**dadurch gekennzeichnet, dass** das Antriebsrad (28) eine erste, an einer gemeinsamen Rotationsachse mit einer Drehscheibe (24) befestigte Rolle (32) aufweist, welche über einen Gurt oder eine Kette (34) mit einer zweiten Rolle (36), die an einer Welle (40) der Gelenkkupplung (50) befestigt ist, verbunden ist.

6. Wasserströmungskraftwerk nach Anspruch 5,
**dadurch gekennzeichnet, dass** Paare von Drehscheiben (24) angeordnet sind, um sich unabhängig voneinander zu drehen und von der Gelenkkupplung (50) gesteuert zu werden.

7. Wasserströmungskraftwerk nach einem oder mehreren der vorhergehenden Ansprüche, **dadurch gekennzeichnet, dass** die Gelenkkupplung (50) aus einem Getriebegehäuse gebildet ist, das mindestens zwei Planetengetriebe (42) aufweist, wobei jeweilige Wellen (40) der Gelenkkupplung, die mit den Wellen des Planetenrads (46) der Planetengetriebe verbunden sind, und dass zwischen dem Ringrad (48) der Planetengetriebe ein erstes konisches Zahnrad (56) angeordnet ist, welches über eine Welle (54) mit dem Generator (60) verbunden ist, und ein zweites konisches Zahnrad (58), das über eine Welle (52) mit einem Servomotor verbunden ist.

8. Wasserströmungskraftwerk nach Anspruch 7,
**dadurch gekennzeichnet, dass** die Welle (54), die mit dem Generator (60) verbunden ist, angeordnet ist, um die gemeinsame Bewegung der Kabel (20) zu steuern, wenn der Generator läuft, und dass die Welle (52), die mit dem Servomotor verbunden ist, angeordnet ist, um die Differentialbewegung der Kabel (20) unabhängig von der gemeinsamen Bewegung zu steuern und somit den Winkel der Flügel (12) zwischen den Kabeln (20) zu regulieren.

9. Wasserströmungskraftwerk nach einem oder mehreren der vorhergehenden Ansprüche, **dadurch gekennzeichnet, dass** die Gelenkkupplung (50) und der Generator (60) in einem wasserdichten Gehäuse (26) untergebracht sind.

10. Wasserströmungskraftwerk nach Anspruch 4,
**dadurch gekennzeichnet, dass** die Drehscheiben (24) angeordnet sind, um gegenseitig entlang der Rotationsachse versetzt zu werden, wobei der Abstand zwischen Paaren von Drehscheiben (24) abhängig von dem Winkel der Flügel (12) geändert wird.

11. Wasserströmungskraftwerk nach Anspruch 1,
**dadurch gekennzeichnet, dass** das Antriebsrad (28) für Wellenbetrieb geeignet ist.

12. Wasserströmungskraftwerk nach einem oder mehreren der vorhergehenden Ansprüche, **dadurch gekennzeichnet, dass** die Flügel (12) in einer mindestens teilweise gebogenen Flugzeugflügelform gebildet sind.

13. Wasserströmungskraftwerk (10) nach Anspruch 12,
**dadurch gekennzeichnet, dass** die gebogene Form angeordnet ist, um dem Flügel (12) im Wasser Gleichgewicht zu verleihen und dass Abweichungen von der Gleichgewichtsposition durch die Kräfte, die auf den Flügel wirken, entgegengewirkt wird.

14. Wasserströmungskraftwerk (10) nach Anspruch 2,
**dadurch gekennzeichnet, dass** die Segel oder Flügel (12) an jeweilige Kabel (20) mit Hilfe von Klemmkupplungen (22) befestigt sind, wobei die Klemmkupplung (22) einen Verschlussmechanismus aufweist und angeordnet ist, um den Flügeln eine begrenzte Bewegung zu verleihen, wenn sie über die Drehscheiben (24) laufen, und um andernfalls die Flügel in der gewünschten Position zu halten.

15. Wasserströmungskraftwerk (10) nach Anspruch 14,
**dadurch gekennzeichnet, dass** die Klemmkupplung (22) angeordnet ist, um den Winkel der Flügel im Wasser anzupassen.

16. Wasserströmungskraftwerk (10) nach Anspruch 1,
**dadurch gekennzeichnet, dass** die Drehscheiben (24) axial in ihren jeweiligen Rahmen (16, 18) versetzt werden können.

17. Verfahren zum Betrieb eines Wasserströmungskraftwerks (10), das unter Wasser angeordnet werden soll, umfassend mehrere Segel oder Flügel (12), die an einer rotierenden Endloskette (14) befestigt sind, welche zwischen zwei einander gegenüberliegenden, jeweiligen Drehscheiben (24) verläuft, wobei die Endloskette (14) sich durch Schub von den Flügeln (12) unter dem Einfluss des umgebenden Wasser rundet, und um elektrische Energie mit Hilfe von mindestens einem Generator (60), der mit der Endloskette (14) verbunden ist, zu erzeugen, **dadurch gekennzeichnet, dass**
- die Drehscheiben (24) in jeweiligen Rahmen (16, 18) paarweise befestigt werden, wobei die Rahmen drehverankert sind, und mehrere Kabel (20) der Endloskette (14) frei zwischen den Rahmen (16, 18) und um die Drehscheiben (24) herum laufen gelassen werden, und
- eine Gelenkkupplung (50) über ein Antriebsrad (28) mit mindestens einem der Paare der Drehscheiben (24) verbunden wird, wobei die Gelenkkupplung die gemeinsame Bewegung der Kabel (20) der Endloskette (14) steuert, wenn der Generator (60) läuft, und die Differentialbewegung der Kabel (20) unabhängig von der gemeinsamen Bewegung steuert zur Regulierung des Winkels der Flügel (12) zwischen den Kabeln (20) durch Einstellung der Geschwindigkeit der Kabel (20) in Bezug aufeinander.

18. Verfahren nach Anspruch 17, **dadurch gekennzeichnet, dass** das Antriebsrad (28) zwischen der Gelenkkupplung (50) und jeder der Drehscheiben (24) verbunden ist.

19. Verfahren nach Anspruch 17, **dadurch gekennzeichnet, dass**, um die Endloskette (14) durch Erzeugung einer Schubkraft und einer Hebekraft, die an die Kabel (20) übertragen wird, rund anzutreiben, die Flügel (12) in Bezug auf die Wasserströmung geneigt werden.

## Revendications

1. Centrale utilisant les courants des marées (10) destinée à être placée sous l'eau, comprenant plusieurs voiles ou ailes (12) qui sont fixées à une chaîne rotative sans fin (14) s'étendant entre des disques rotatifs (24) respectifs opposés se faisant face, avec la chaîne sans fin (14) qui est forcée à tourner par la poussée des ailes (12) sous l'influence de l'eau environnante, et au moins un générateur (60) pour la génération de l'énergie électrique, qui est raccordé à la chaîne sans fin (14),
**caractérisée en ce que**
- les disques rotatifs (24) sont montés dans des bâtis (16, 18) respectifs qui sont ancrés en rotation, et **en ce que** la chaîne sans fin (14) comprend plusieurs câbles (20) qui s'étendent librement entre les bâtis (16, 18) et autour des disques rotatifs (24), et
- un engrenage d'entraînement (28) est raccordé à chacun des disques rotatifs et est raccordé à un couplage universel (50), avec ledit générateur (60) qui est raccordé au couplage universel (50), et
**en ce que** ledit couplage universel (50) est agencé pour ajuster la vitesse des disques rotatifs (24) et donc des câbles (20), indépendamment les uns des autres, moyennant quoi l'angle des voiles ou des ailes (12) par rapport aux courants des marées est régulé.

2. Centrale utilisant les courants des marées (10) selon la revendication 1,
**caractérisée en ce que** la chaîne sans fin (14) comprend deux câbles sans fin (20), dans lesquels lesdites voiles ou ailes (12) sont agencées entre les câbles (20) et **en ce que** chaque câble (20) s'étend sur et autour d'un disque rotatif (24) respectif, de sorte que les voiles ou ailes (12) sont entraînées en rotation entre des paires respectives de disques rotatifs (24).

3. Centrale utilisant les courants des marées (10) selon la revendication 1,
**caractérisée en ce que** lesdits bâtis (16, 18) sont montés de manière rotative de sorte qu'ils peuvent s'ajuster à l'angle des câbles de sorte que la tension dans les câbles (20) est perpendiculaire à l'axe de rotation des disques rotatifs (24).

4. Centrale utilisant les courants des marées (10) selon la revendication 1,
**caractérisée en ce que** ledit couplage universel (50) est raccordé à un engrenage d'entraînement (28) raccordé à chaque disque rotatif (24) dans un bâti (16, 18) respectif.

5. Centrale utilisant les courants des marées selon la revendication 4,
**caractérisée en ce que** l'engrenage d'entraînement (28) comprend une première poulie (32) fixée à un axe de rotation commun avec un disque rotatif (24) qui, via une courroie ou une chaîne (34), est raccordé à une seconde poulie (36) fixée à un arbre (40) du couplage universel (50).

6. Centrale utilisant les courants des marées selon la revendication 5,
**caractérisée en ce que** les paires de disques rotatifs (24) sont agencées afin de tourner indépendamment les unes des autres, et pour être commandées par le couplage universel (50).

7. Centrale utilisant les courants des marées selon une ou plusieurs des revendications précédentes, **caractérisée en ce que** ledit couplage universel (50) est composé d'une boîte à engrenages comprenant au moins deux engrenages planétaires (42), avec des arbres (40) respectifs du couplage universel qui sont raccordés aux arbres de la roue planétaire (46) des engrenages planétaires, et **en ce que**, entre la couronne conique de réduction (48) des engrenages planétaires, on place une première roue dentée conique (56) qui, via un arbre (54), est raccordée au générateur (60) et une seconde roue dentée conique (58) qui est raccordée à un servomoteur via un arbre (52).

8. Centrale utilisant les courants des marées selon la revendication 7,
**caractérisée en ce que** l'arbre (54) raccordé au générateur (60) est agencé pour commander le mouvement commun des câbles (20) lorsque le générateur fonctionne, et **en ce que** l'arbre (52) raccordé au servomoteur est agencé pour commander le mouvement différentiel des câbles (20) indépendamment dudit mouvement commun afin de réguler ainsi l'angle des ailes (12) entre les câbles (20).

9. Centrale utilisant les courants des marées selon une ou plusieurs des revendications précédentes, **caractérisée en ce que** le couplage universel (50) et le générateur (60) sont maintenus dans un boîtier étanche à l'eau (26).

10. Centrale utilisant les courants des marées selon la revendication 4,
**caractérisée en ce que** les disques rotatifs (24) sont agencés pour être mutuellement déplacés le long dudit axe de rotation, moyennant quoi la distance entre les paires de disques rotatifs (24) est modifiée en fonction de l'angle des ailes (12).

11. Centrale utilisant les courants des marées selon la revendication 1,
**caractérisée en ce que** ledit engrenage d'entraînement (28) est adapté pour le fonctionnement de l'arbre.

12. Centrale utilisant les courants des marées selon une ou plusieurs des revendications précédentes, **caractérisée en ce que** les ailes (12) sont formées dans au moins une forme d'aile d'avion partielle arquée.

13. Centrale utilisant les courants des marées selon la revendication 12,
**caractérisée en ce que** la forme arquée est agencée pour donner l'équilibre à l'aile (12) dans l'eau et **en ce que** les écarts de la position d'équilibre sont contrebalancés par les forces qui agissent sur l'aile.

14. Centrale utilisant les courants des marées (10) selon la revendication 2,
**caractérisée en ce que** lesdites voiles ou ailes (12) sont fixées à des câbles (20) respectifs à l'aide de couplages de serrage (22) où ledit couplage de serrage (22) comprend un mécanisme de verrouillage et est agencé pour donner aux ailes, un mouvement limité, lorsqu'elles s'étendent sur les disques rotatifs (24) et sinon pour maintenir les ailes dans la position voulue.

15. Centrale utilisant les courants des marées (10) selon la revendication 14,
**caractérisée en ce que** le couplage de serrage (22) est agencé pour ajuster l'angle des ailes dans l'eau.

16. Centrale utilisant les courants des marées (10) selon la revendication 1,
**caractérisée en ce que** les disques rotatifs (24) peuvent être déplacés axialement dans leurs bâtis (16, 18) respectifs.

17. Procédé pour actionner une centrale utilisant les courants des marées (10) destinée à être placée sous l'eau, comprenant plusieurs voiles ou ailes (12) qui sont fixées sur une chaîne rotative sans fin (14) s'étendant entre les disques rotatifs (24) respectifs opposés se faisant face, avec la chaîne sans fin (14) qui est entraînée en rond par la poussée des ailes (12) sous l'influence de l'eau environnante, et afin de générer de l'énergie électrique à l'aide d'au moins un générateur (60) qui est raccordé à la chaîne sans fin (14), **caractérisé par** les étapes consistant à
- fixer les disques rotatifs (24) en paires dans des bâtis (16, 18) respectifs, lesdits bâtis étant ancrés de manière rotative, et pour laisser plusieurs câbles (20) de la chaîne sans fin (14) s'étendre librement entre les bâtis (16, 18) et en rond entre les disques rotatifs (24), et
- raccorder un couplage universel (50) via un engrenage d'entraînement (28) à au moins l'une des paires de disques rotatifs (24), où le couplage universel commande le mouvement commun des câbles (20) de la chaîne sans fin (14) lorsque le générateur (60) fonctionne, et commande le mouvement différentiel des câbles (20) indépendamment dudit mouvement commun, pour la régulation de l'angle des ailes (12) entre les câbles (20), par l'ajustement de la vitesse des câbles (20) les uns par rapport aux autres.

18. Procédé selon la revendication 17, **caractérisé en ce que** l'engrenage d'entraînement (28) est raccordé entre le couplage universel (50) et chacun des disques rotatifs (24).

19. Procédé selon la revendication 17, **caractérisé en ce que**, pour entraîner la chaîne sans fin (14) en rond par la génération d'une force de poussée et d'une force de levage qui est transférée aux câbles (20), les ailes (12) sont inclinées par rapport aux courants des marées.
